# EUROPEAN PATENT SPECIFICATION

(11) **EP 1 478 239 B1**
(45) Date of publication and mention of the grant of the patent: **09.04.2008**
(21) Application number: 03737433.7
(22) Date of filing: 05.02.2003
(51) Int. Cl.: A23G 7/00, B65G 47/51, B65B 35/26

(54) **UNIT AND METHOD FOR REORDERING CONFECTIONERY PRODUCTS, SUCH AS SWEETS AND SIMILAR**
EINHEIT UND VERFAHREN ZUR NACHBESTELLUNG VON SÜSSWAREN, WIE ZUM BEISPIEL SÜSSIGKEITEN UND DERGLEICHEN
APPAREILLAGE PERMETTANT LA REMISE EN ORDRE DE CONFISERIES, NOTAMMENT DE BONBONS ET ANALOGUE

(30) Priority: 06.02.2002 IT BO20020065
(43) Date of publication of application: 24.11.2004
(73) Proprietor: AZIONARIA COSTRUZIONI MACCHINE AUTOMATICHE-A.C.M.A.-S.p.A., 40131 Bologna (IT)
(72) Inventor: SALICINI, Sandro, I-40050 Monterenzio (IT); CIVOLANI, Daniele, I-40062 Molinella (IT)
(74) Representative: Jorio, Paolo
(86) International application number: PCT/IT2003/000055
(87) International publication number: WO 2003/065818

(56) References cited:
- EP-A- 0 127 459
- DE-A- 3 315 598
- FR-A- 1 081 872
- US-A- 4 238 025
- US-A- 4 962 628

## Description

### TECHNICAL FIELD

The present invention relates to a unit and a method for reordering confectionery products, such as sweets and similar.

Sweets, to which reference is made in the following description purely by way of example, normally come off production machines in orderly successions, after which, they are stored in bulk and later fed to wrapping machines where they must be formed back into an equally spaced succession by means of a reordering unit.

### BACKGROUND ART

One known type of reordering unit comprises a spacing disk rotating about a substantially vertical axis and having a truncated-cone-shaped plate, which slopes down to a number of seats equally spaced about the spacing disk axis and fed along a given path. The sweets are fed in bulk, at said axis, onto the truncated-cone-shaped portion of the spacing disk, and, as the spacing disk rotates, slide or roll along the truncated-cone-shaped portion into the seats. The sweets are later extracted at an extraction station located along said given path, and are fed to a wrapping machine, which wraps each sweet in a sheet of wrapping material. Though the seats are sized to ensure each is only engaged by one sweet, the random way in which the sweets are spaced along the spacing disk does not guarantee every seat fed through the extraction station is actually engaged, the likelihood of which depends on the shape of the sweet-For example, a spherical sweet is more likely to engage a seat on the spacing disk much faster than a triangular parallelepiped-shaped sweet. That is, a spherical sweet, which can roll and is therefore more mobile, need simply reach the seat, whereas a triangular parallelepiped-shaped sweet must also be oriented the same way as the seat.

In either case, the presence of vacant seats at the extraction station, i.e. non-supply of sweets to the wrapping machine, has a negative effect on the follow-up wrapping process.

US4238025 discloses a device for automatically replacing defective cigarette packets discarded from a feeding line on which the packets advance in a single row. The device comprises a pair of gravity-feed reserve hoppers, containing each a stack of reserve packets, and a transferring drum, operatively interposed between the said reserve hoppers and the feeding line; the drum is driven in step-by-step rotation in relation to the absence, signalled by suitable sensing and controlling devices, of a discarded defective packet. Upon each step rotation of the transferring drum, a cigarette packet is taken by the drum alternately from one of the said reserve hoppers, and it is progressively transferred onto the feeding line, to take the place of the previously discarded packet.

FR1081872 discloses adistributor, in particular for a packing machine for bonbons.

### DISCLOSURE OF INVENTION

It is an object of the present invention to provide a unit and a method for reordering sweets, designed to eliminate the drawbacks of known units, and which provides for supplying sweets in an orderly uninterrupted succession.

According to the present invention, there is provided a unit and a method for reordering confectionery products as recited in the accompanying claims.

### BRIEF DESCRIPTION OF THE DRAWINGS

A non-limiting embodiment of the present invention will be described by way of example with reference to the accompanying drawings, in which:
Figure 1 shows a view in perspective, with parts in section and parts removed for clarity, of a reordering unit in accordance with the present invention;

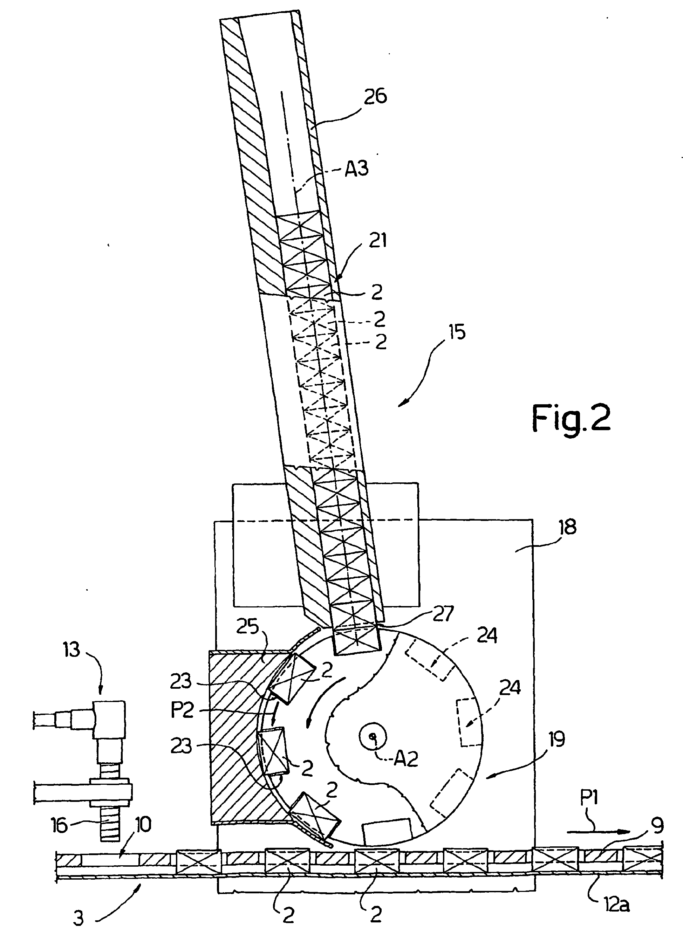

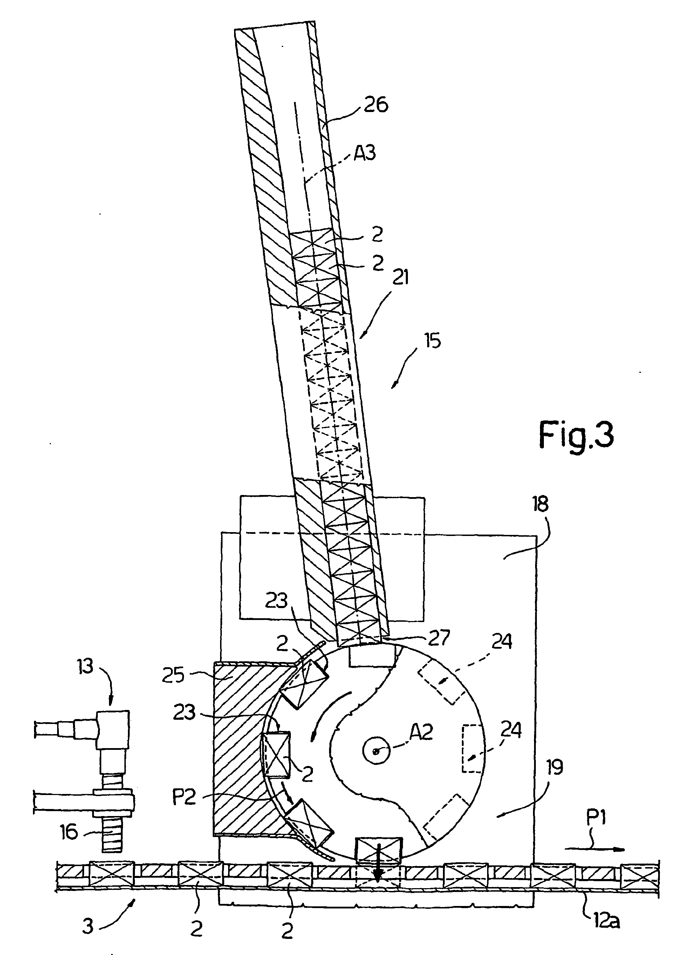

Figures 2 and 3 show larger-scale sections, with parts removed for clarity, of the Figure 1 unit at two different operating stages.

### BEST MODE FOR CARRYING OUT THE INVENTION

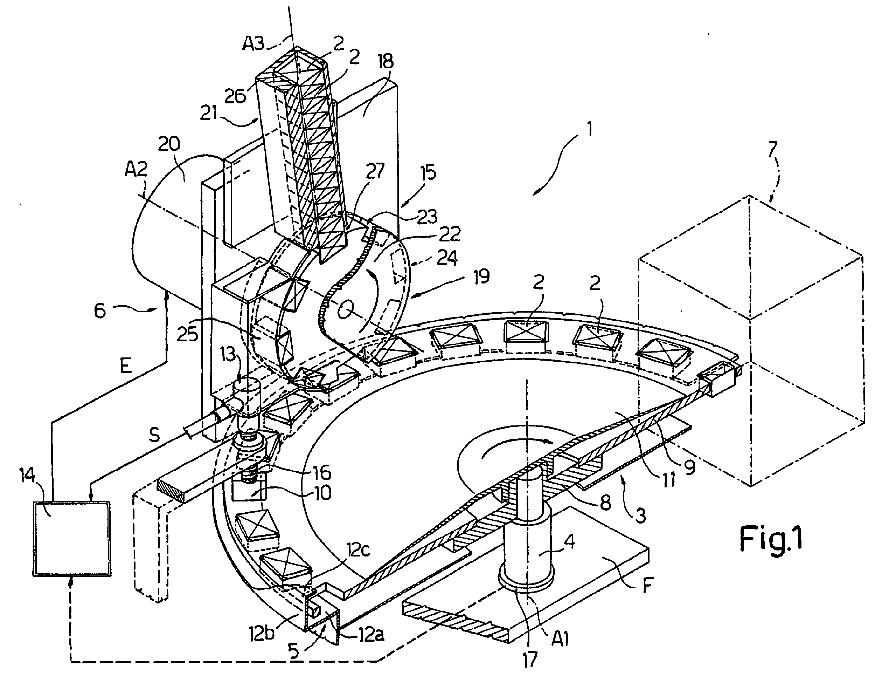

Number 1 in Figure 1 indicates as a whole a unit for reordering sweets 2, which are fed to unit 1 in bulk, and are arranged by unit 1 into a given succession enabling wrapping of sweets 2.

Sweets 2 are square parallelepiped-shaped, and are fed in bulk to unit 1 in known manner not shown in the accompanying drawings. Unit 1 comprises a supporting frame F; a disk 3 supported on a shaft 4 and rotating about a vertical axis A1; a fixed ring 5; and a makeup device 6 for making up sweets 2. An extraction station 7 for extracting sweets 2 from disk 3 is located alongside the periphery of disk 3 to extract sweets 2 from unit 1 and feed sweets 2 to a known wrapping machine not shown.

Disk 3 comprises a hub 8; an annular plate 9 fitted to hub 8 and having, about its outer edge, a number of openings defining seats 10 equally spaced about axis Al; and a truncated-cone-shaped plate 11 fitted to hub 8, and located over plate 9, with its convexity facing upwards and sloping down to seats 10. Seats 10 are arranged along a circular first path Pl extending about axis Al, and along which are located makeup device 6 and extraction station 7. Ring 5 extends about axis A1, has a U-shaped section, and comprises a horizontal portion 12a located underneath plate 9 at seats 10; a vertical portion 12b at the outer edge of plate 9; and a portion 12c extending over plate 9, close to seats 10.

Makeup device 6 comprises a detector 13; a control unit 14; and a feed device 15 for supplying sweets 2.

Detector 13, feed device 15, and extraction station 7 are located in succession along path P1 in the traveling direction of seats 10. Detector 13 comprises an optical sensor 16 located over disk 3 along path Pl, and which, in use, emits a signal S. Control unit 14 is connected to sensor 16, and, on the basis of discriminating values, processes signal S, and emits an error signal E in the event of given conditions, as described later on. Unit 14 is also connected to feed device 15 to command supply of sweets 2 by device 15; and to a position sensor 17 about shaft 4.

Device 15 comprises a vertical supporting plate 18 fixed to frame F; a conveyor 19; a step motor 20 for driving conveyor 19; and a store 21 over conveyor 19.

Conveyor 19 comprises a cylindrical wheel 22 rotating about a horizontal axis A2; and a succession of pockets 23 formed in the periphery of wheel 22 and defining respective seats 24 for sweets 2. Conveyor 19 also comprises a guide 25 fixed to plate 18 and facing the periphery of wheel 22 to retain sweets 2 inside pockets 23. Pockets 23, in fact, travel along a circular path P2 of sweets 2, which extends in a plane perpendicular to plate 9, i.e. to the plane of path P1, and is substantially tangent to path Pl. Guide 25 extends along path P2, between store 21 and plate 9; and store 21 comprises a conduit 26 extending along an axis A3, which intersects axis A2 and slope slightly with respect to vertical axis A1.

Conduit 26 has an outlet 27, which is tangent to the periphery of wheel 22 to feed sweets 2 into seats 24 on wheel 22.

In actual use, sweets 2 are fed in bulk onto the center of truncated-cone-shaped plate 11, which rotates together with disk 3 about axis A1. The centrifugal force produced by rotation of disk 3, on the one hand, and the shape of plate 11 sloping down to seats 10, on the other, push sweets 2 towards the periphery of disk 3, towards seats 10, and onto portion 12c of fixed ring 5. Sweets 2, which are randomly arranged and oriented, are brought into contact with portion 12b, which brakes and changes the orientation of sweets 2 carried on disk 3. When the orientation and position of a sweet 2 coincide with the position of a seat 10, sweet 2 drops through seat 10 onto portion 12a of plate 5, and is fed in this position by disk 3 to extraction station 7.

Detector 13 constantly monitors the fill status of each seat 10 at a given point along path P1, and emits a signal S, which varies depending on the distance between optical sensor 16 and the surface facing sensor 16, and which assumes a first value when sensor 16 faces plate 9, a second value, greater than the first, when sensor 16 faces a sweet 2, and a third value, smaller than the first, when there is no sweet 2, i.e. seat 10 is empty, so that sensor 16 faces portion 12a of plate 5.

When the value of signal S is below the threshold value determined experimentally, control unit 14 emits an error signal E indicating an empty seat 10, and which activates motor 20 of feed device 15. Emission of error signal E is subordinate to an angle signal emitted by sensor 17. In other words, motor 20 moves wheel 22 one step as seat 10 passes beneath wheel 22, so that a pocket 23 is positioned directly beneath wheel 22, and a sweet 2 is transferred by force of gravity from pocket 23 to seat 10 underneath.

As it rotates about axis A2, wheel 22 positions an empty pocket 23 at outlet 27 of conduit 26, from which the whole succession of sweets 2 drops down by force of gravity, and the first sweet 2 in the succession engages the pocket 23 at outlet 27.

Obviously, store 21 must be fed with an orderly succession of sweets 2 to fill any seats 10 not engaged by respective sweets 2.

Though the above description refers to square parallelepiped-shaped sweets 2, the present invention applies to sweets of any shape. That is, plate 9, wheel 22 and conduit 26 of the unit described need simply be replaced with a plate, wheel and conduit with seats and sections of the same shape as the sweets involved.

## Claims

1. A unit for reordering confectionery products, such as sweets and similar; the unit (1) comprising a spacing disk (3), which receives sweets (2) in bulk, comprises a number of peripheral first seats (10), each for receiving a respective sweet (2), and rotates about a substantially vertical first axis (A1) to feed said first seats (10) along a first path (P1) through an extraction station (7) for extracting the sweets (2); the unit (1) being **characterized by** comprising a makeup device (6) for making up the sweets (2) inside any vacant first seats (10); the makeup device (6) comprising a detector (13) located along said first path (P1) to detect any vacant first seats (10), and a sweet feed device (15) located along said first path (Pl), between said detector (13) and said extraction station (7), to feed sweets (2) selectively into the vacant said first seats (10).

2. A unit as claimed in Claim 1, **characterized in that** said feed device (15) comprises an orderly succession of second seats (24) movable along a second path (P2) substantially tangent to the first path (P1) and over the first path (P1).

3. A unit as claimed in Claim 2, **characterized in that** said feed device (15) comprises a wheel (22) rotating about a substantially horizontal second axis (A2).

4. A unit as claimed in Claim 3, **characterized in that** said second seats (24) are defined by respective pockets (23) extending radially towards said second axis (A2), so that a sweet (2) is expelled by force of gravity from the respective second seat (24).

5. A unit as claimed in Claim 4, **characterized in that** said feed device (15) comprises a guide (25) parallel to a portion of said second path (P2) to retain the sweets (2) inside said second seats (24).

6. A unit as claimed in Claim 3 or 4, **characterized in that** said feed device (15) comprises an actuator (20) for operating said wheel (22) as a function of a signal (S) emitted by said detector (13).

7. A unit as claimed in Claim 6, **characterized in that** said makeup device (6) comprises a control unit (14) for processing the emitted said signal (S) and supplying an error signal (E) related to the status of a vacant first seat (10) to activate said actuator (20).

8. A unit as claimed in Claim 7, **characterized in that** said control unit (14) comprises a position sensor (17) for determining the angular position of said spacing disk (3) and activating said actuator (20) as a function of the position of the spacing disk (3).

9. A unit as claimed in any one of Claims 3 to 8, **characterized in that** said feed device (15) comprises a store (21) located at said wheel (22) and for feeding said wheel (22).

10. A unit as claimed in Claim 9, **characterized in that** said store (21) comprises a conduit (26) containing a succession of stacked, equally oriented sweets (2); said conduit (26) having an outlet (27) facing and substantially tangent to said second path (P2) to feed sweets (2) into said second seats (24).

11. A method of reordering confectionery products, such as sweets and similar; the method comprising feeding sweets (2) in bulk onto a spacing disk (3) comprising a number of peripheral first seats (10), each for receiving a respective sweet (2); and rotating the spacing disk (3) about a substantially vertical first axis (A1) to feed said first seats (10) along a first path (P1) through an extraction station (7) for extracting the sweets (2); the method being **characterized by** detecting any vacant first seats (10) by means of a detector (13) located upstream from the extraction station (7); and making up the sweets (2) inside the vacant first seats (10), between said detector (13) and the extraction station (7), by means of a sweet feed device (15).

12. A method as claimed in Claim 11, **characterized by** feeding sweets (2) along a second path (P2) by means of a feed device (15); the second path (P2) being substantially tangent to the first path (P1) and over the first path (P1).

13. A method as claimed in Claim 12, **characterized by** transferring sweets (2) from said feed device (15) to the empty said first seats (10).

14. A method as claimed in Claim 13, **characterized in that** said feed device (15) comprises an actuator (20) for activating transfer of said sweets (2); said actuator (20) being activated as a function of a signal (S) emitted by said detector (13).

15. A method as claimed in Claim 14, **characterized by** supplying an error signal (B), which is a function of the emitted signal (S), and is related to the status of a vacant first seat (10) to activate said actuator (20).

16. A method as claimed in Claim 15, **characterized by** detecting the angular position of said spacing disk (3), and activating said actuator (20) as a function of the position of the spacing disk (3).

17. A method as claimed in any one of Claims 13 to 16, **characterized in that** said feed device (15) comprises a wheel (22) rotating about a second axis (A2) and having a number of second seats (24) equally spaced about said second axis (A2); and a store (21) located at said wheel (22) and for feeding said wheel (22).

18. A method as claimed in Claim 17, **characterized in that** said sweets (2) are stacked in said store (21) and fed by force of gravity to said wheel (22).

## Patentansprüche

1. Eine Einheit zum Neuanordnen von Konfektprodukten wie Süßigkeiten und ähnlichen Produkten; wobei die Einheit (1) eine Separierscheibe (3) umfasst, die Süßigkeiten in großen Gebinden aufnimmt, eine Anzahl von ersten Aufnahmen (10) am Rand aufweist, die jeweils zur Aufnahme einer Süßigkeit (2) geeignet sind, und die um eine im Wesentlichen senkrechte erste Achse (A1) rotiert, um die ersten Aufnahmen (10) entlang eines ersten Wegs (P1) durch eine Extraktionsstation (7) zum Extrahieren der Süßigkeiten (2) zu beschicken; wobei die Einheit (1) **dadurch gekennzeichnet ist, dass** sie eine Nachspeisevorrichtung (6) umfasst, um die Süßigkeiten (2) in jede freie der ersten Aufnahmen (10) nachzuführen; wobei die Nachspeisevorrichtung (6) einen Detektor (13) aufweist, der entlang des ersten Wegs (P1) angeordnet ist, um jede freie der ersten Aufnahmen (10) zu detektieren, und eine Süßigkeitenzuführvorrichtung (15), die entlang dem ersten Pfad (P1) zwischen dem Detektor und der Extraktionsstation (7) angeordnet ist, um Süßigkeiten (2) selektiv in die freien ersten Aufnahmen (10) zuzuführen.

2. Eine Einheit nach Anspruch 1, **dadurch gekennzeichnet, dass** die Zuführvorrichtung (15) eine systematische Folge von zweiten Aufnahmen (24) umfasst, die entlang eines zweiten Wegs (P2) bewegbar sind, der im Wesentlichen tangential zum ersten Pfad (P1) und über dem ersten Pfad (P1) verläuft.

3. Eine Einheit nach Anspruch 2, **dadurch gekennzeichnet, dass** die Zuführvorrichtung (15) ein Rad (22) umfasst, das um eine im Wesentlichen horizontale zweite Achse (A2) dreht.

4. Eine Einheit nach Anspruch 3, **dadurch gekennzeichnet, dass** die zweiten Aufnahmen (24) durch entsprechende Taschen (23) definiert sind, die sich hin zu der zweiten Achse (A2) radial so erstrecken, dass eine Süßigkeit (2) durch Schwerkraft aus der entsprechenden zweiten Aufnahme (24) ausgestoßen wird.

5. Eine Einheit nach Anspruch 4, **dadurch gekennzeichnet, dass** die Zuführvorrichtung (15) eine Führung (25) parallel zu einem Abschnitt des zweiten Wegs (P2) umfasst, um die Süßigkeiten innerhalb der zweiten Aufnahmen zu halten.

6. Eine Einheit nach Anspruch 3 oder 4, **dadurch gekennzeichnet, dass** die Zuführvorrichtung (15) ein Stellglied (20) zum Betreiben des Rads (22) als eine Funktion eines Signals (S) umfasst, das von dem Detektor (13) ausgegeben wird.

7. Eine Einheit nach Anspruch 6, **dadurch gekennzeichnet, dass** die Nachspeiseeinrichtung (6) eine Steuereinheit (14) zum Bearbeiten des abgegebenen Signals (S) und zum Bereitstellen eines Fehlersignals (E) umfasst, das zu dem Zustand einer freien ersten Aufnahme (10) in Beziehung steht, um das Stellglied (20) zu aktivieren.

8. Eine Einheit nach Anspruch 7, **dadurch gekennzeichnet, dass** die Steuereinheit (14) einen Positionssensor (17) zum Bestimmen der Winkelposition der Separierscheibe (3) und zum Aktivieren des Stellglieds (20) als eine Funktion der Position der Separierscheibe (3) umfasst.

9. Eine Einheit nach einem der Ansprüche 3 bis 8, **dadurch gekennzeichnet, dass** die Zuführvorrichtung (15) einen Speicher (21) umfasst, der an dem Rad (22) und zum Zuführen zu dem Rad (22) vorgesehen ist.

10. Eine Einheit nach Anspruch 9, **dadurch gekennzeichnet, dass** der Speicher (21) eine Zuleitung (26) umfasst, die eine Folge von gestapelten, gleich orientierten Süßigkeiten (2) enthält; wobei die Zuleitung (26) einen Auslass (27) aufweist, der dem zweiten Weg (P2) gegenüberliegt und im Wesentlichen tangential dazu ist, um Süßigkeiten (2) in die zweiten Aufnahmen (24) zuzuführen.

11. Ein Verfahren zum Neuanordnen von Konfektprodukten wie Süßigkeiten und ähnlichen Produkten; das Verfahren umfasst das Zuführen von Süßigkeiten in großen Gebinden auf eine Separierscheibe (3), die eine Anzahl von ersten Aufnahmen (10) am Rand aufweist, die jeweils zur Aufnahme einer Süßigkeit (2) geeignet sind; und das Rotieren der Separierscheibe (3) um eine im Wesentlichen senkrechte erste Achse (A1), um die ersten Aufnahmen (10) entlang eines ersten Wegs (P1) durch eine Extraktionsstation (7) zum Extrahieren der Süßigkeiten (2) zu beschicken; das Verfahren ist **gekennzeichnet durch** Erfassen jeder freien Aufnahme (10) mittels eines Detektors (13), der stromauf der Extraktionsstation (7) angeordnet ist; und **durch** Nachspeisen der Süßigkeiten (2) mittels einer Süßigkeitenzuführvorrichtung (15) in die freien ersten Aufnahmen (10) zwischen dem Detektor (13) und der Extraktionsstation (7).

12. Ein Verfahren nach Anspruch 11, **gekennzeichnet durch** Zuführen von Süßigkeiten entlang eines zweiten Wegs (P2) mittels einer Zuführvorrichtung (15); wobei der zweite Weg (P2) im Wesentlichen tangential zu dem ersten Weg (P1) und oberhalb des ersten Wegs (P1) liegt.

13. Ein Verfahren nach Anspruch 12, **gekennzeichnet durch** Übertragen von Süßigkeiten (2) von der Zuführvorrichtung (15) in die leeren ersten Aufnahmen (10).

14. Ein Verfahren nach Anspruch 13, **dadurch gekennzeichnet, dass** die Zuführvorrichtung (15) ein Stellglied (20) zum Aktivieren der Übertragung der Süßigkeiten (2) umfasst; wobei das Stellglied als eine Funktion eines Signals (S) aktiviert wird, das von dem Detektor (13) ausgegeben wird.

15. Ein Verfahren nach Anspruch 14, **gekennzeichnet durch** Bereitstellen eines Fehlersignals (E), das eine Funktion des ausgesendeten Signals (S) ist und zu dem Zustand einer freien ersten Aufnahme (10) in Beziehung steht, um das Stellglied (20) zu aktivieren.

16. Ein Verfahren nach Anspruch 15, **gekennzeichnet durch** Bestimmen der Winkelposition der Separierscheibe (3) und **durch** Aktivieren des Stellglieds (20) als eine Funktion der Position der Separierscheibe (3).

17. Ein Verfahren nach einem der Ansprüche 13 bis 16, **dadurch gekennzeichnet, dass** die Zuführvorrichtung (15) ein Rad (22) umfasst, das um eine zweite Achse (A2) dreht und eine Anzahl von zweiten Aufnahmen (24) aufweist, die um die zweite Achse gleichförmig verteilt angeordnet sind; und einen Speicher (21), der an dem Rad (22) und zum Nachspeisen des Rads (22) vorgesehen ist.

18. Ein Verfahren nach Anspruch 17, **dadurch gekennzeichnet, dass** die Süßigkeiten (2) in dem Speicher (21) gespeichert sind und durch Schwerkraft dem Rad (22) zugeführt werden.

## Revendications

1. Unité de remise en ordre de confiseries, notamment de bonbons et analogues ; l'unité (1) comprenant un disque d'espacement (3), qui reçoit des bonbons (2) en vrac, comprend un certain nombre de premiers réceptacles périphériques (10), chacun étant destiné à recevoir un bonbon respectif (2), et tourne autour d'un premier axe sensiblement vertical (A1) pour acheminer lesdits premiers réceptacles (10) le long d'un premier chemin (P1) à travers un poste d'extraction (7) destiné à extraire les bonbons (2) ; l'unité (1) étant **caractérisée en ce qu'**elle comprend un dispositif d'introduction (6) destiné à introduire les bonbons (2) à l'intérieur de tout premier réceptacle (10) vide ; le dispositif d'introduction (6) comprenant un détecteur (13) situé le long dudit premier chemin (P1) pour détecter tout premier réceptacle (10) vide, et un dispositif d'acheminement de bonbon (15) situé le long dudit premier chemin (Pl), entre ledit détecteur (13) et ledit poste d'extraction (7), pour acheminer les bonbons (2) de manière sélective dans lesdits premiers réceptacles (10) vides.

2. Unité selon la revendication 1, **caractérisée en ce que** ledit dispositif d'acheminement (15) comprend une succession ordonnée de seconds réceptacles (24) mobiles le long d'un second chemin (P2) sensiblement tangent au premier chemin (P1) et situé au-dessus du premier chemin (P1).

3. Unité selon la revendication 2, **caractérisée en ce que** ledit dispositif d'acheminement (15) comprend une roue (22) tournant autour d'un second axe sensiblement horizontal (A2).

4. Unité selon la revendication 3, **caractérisée en ce que** lesdits seconds réceptacles (24) sont définis par des poches respectives (23) s'étendant radialement vers ledit second axe (A2), de sorte qu'un bonbon (2) soit expulsé du second réceptacle respectif (24) par la force de gravité.

5. Unité selon la revendication 4, **caractérisée en ce que** ledit dispositif d'acheminement (15) comprend un guide (25) parallèle à une partie dudit second chemin (P2) pour maintenir les bonbons (2) à l'intérieur desdits seconds réceptacles (24).

6. Unité selon la revendication 3 ou 4, **caractérisée en ce que** ledit dispositif d'acheminement (15) comprend un actionneur (20) destiné à actionner ladite roue (22) en fonction d'un signal (S) émis par ledit détecteur (13).

7. Unité selon la revendication 6, **caractérisée en ce que** ledit dispositif d'introduction (6) comprend une unité de commande (14) destinée à traiter ledit signal émis (S) et à envoyer un signal d'erreur (E) lié à l'état d'un premier réceptacle (10) vide pour activer ledit actionneur (20).

8. Unité selon la revendication 7, **caractérisée en ce que** ladite unité de commande (14) comprend un capteur de position (17) destiné à déterminer la position angulaire dudit disque d'espacement (3) et à activer ledit actionneur (20) en fonction de la position du disque d'espacement (3).

9. Unité selon l'une quelconque des revendications 3 à 8, **caractérisée en ce que** ledit dispositif d'acheminement (15) comprend une réserve (21) située au niveau de ladite roue (22) et destinée à alimenter ladite roue (22).

10. Unité selon la revendication 9, **caractérisée en ce que** ladite réserve (21) comprend un conduit (26) contenant une succession de bonbons (2) empilés, orientés de façon régulière ; ledit conduit (26) comportant une sortie (27) opposée audit second chemin (P2) et sensiblement tangente à ce dernier pour acheminer les bonbons (2) dans lesdits seconds réceptacles (24).

11. Procédé de remise en ordre de confiseries, notamment de bonbons et analogues ; le procédé comprenant l'acheminement de bonbons (2) en vrac sur un disque d'espacement (3) comprenant un certain nombre de premiers réceptacles périphériques (10), chacun étant destiné à recevoir un bonbon respectif (2) ; et la mise en rotation du disque d'espacement (3) autour d'un premier axe sensiblement vertical (A1) pour acheminer lesdits premiers réceptacles (10) le long d'un premier chemin (P1) à travers un poste d'extraction (7) destiné à extraire les bonbons (2) ; le procédé étant **caractérisé par** la détection de tout premier réceptacle vide (10) à l'aide d'un détecteur (13) situé en amont du poste d'extraction (7) ; et l'introduction des bonbons (2) à l'intérieur des premiers réceptacles (10) vides, entre ledit détecteur (13) et le poste d'extraction (7), à l' aide d' un dispositif d'acheminement de bonbon (15).

12. Procédé selon la revendication 11, **caractérisé par** l'acheminement de bonbons (2) le long d'un second chemin (P2) à l'aide d'un dispositif d'acheminement (15) ; le second chemin (P2) étant sensiblement tangent au premier chemin (P1) et situé au-dessus du premier chemin (P1).

13. Procédé selon la revendication 12, **caractérisé par** le transfert de bonbons (2) depuis ledit dispositif d'acheminement (15) jusqu'auxdits premiers réceptacles (10) vides.

14. Procédé selon la revendication 13, **caractérisé en ce que** ledit dispositif d'acheminement (15) comprend un actionneur (20) destiné à activer le transfert desdits bonbons (2) ; ledit actionneur (20) étant activé en fonction d'un signal (S) émis par ledit détecteur (13).

15. Procédé selon la revendication 14, **caractérisé par** l'envoi d'un signal d'erreur (E), qui est fonction du signal émis (S), et est lié à l'état d'un premier réceptacle (10) vide pour activer ledit actionneur (20).

16. Procédé selon la revendication 15, **caractérisé par** la détection de la position angulaire dudit disque d'espacement (3), et l'activation dudit actionneur (20) en fonction de la position du disque d'espacement (3).

17. Procédé selon l'une quelconque des revendications 13 à 16, **caractérisé en ce que** ledit dispositif d'acheminement (15) comprend une roue (22) tournant autour d'un second axe (A2) et comportant un certain nombre de seconds réceptacles (24) espacés de manière régulière autour dudit second axe (A2) ; et une réserve (21) située au niveau de ladite roue (22) et destinée à alimenter ladite roue (22).

18. Procédé selon la revendication 17, **caractérisé en ce que** lesdits bonbons (2) sont empilés dans ladite réserve (21) et acheminés vers ladite roue (22) par la force de gravité.
